# EUROPEAN PATENT SPECIFICATION

(11) **EP 2 653 285 B1**
(45) Date of publication and mention of the grant of the patent: **10.10.2018**
(21) Application number: 13160987.7
(22) Date of filing: 26.03.2013
(51) Int. Cl.: B29C 45/16, B01L 3/00

(54) **PROVIDING MICRO-CHANNELS IN A PLASTIC SUBSTRATE**
BEREITSTELLUNG VON MIKROKANÄLEN IN EINEM KUNSTSTOFFSUBSTRAT
FOURNITURE DES MICROCANAUX DANS UN SUBSTRAT EN PLASTIQUE

(30) Priority: 16.04.2012 EP 12164218
(43) Date of publication of application: 23.10.2013
(73) Proprietor: SABIC Global Technologies B.V., 4612 PX Bergen op Zoom (NL)
(72) Inventor: Neerincx, Peter Eduard, 5061 PB Oisterwijk (NL); Sniekers, Roland Johannes Joseph Marie, 6097 EX Heel (NL)
(74) Representative: Modiano, Micaela Nadia

(56) References cited:
- EP-A1- 1 707 267
- US-A1- 2011 070 132

## Description

### Field of the invention

The invention relates to a method of manufacturing a substrate with at least one micro-channel.

### Background of the invention

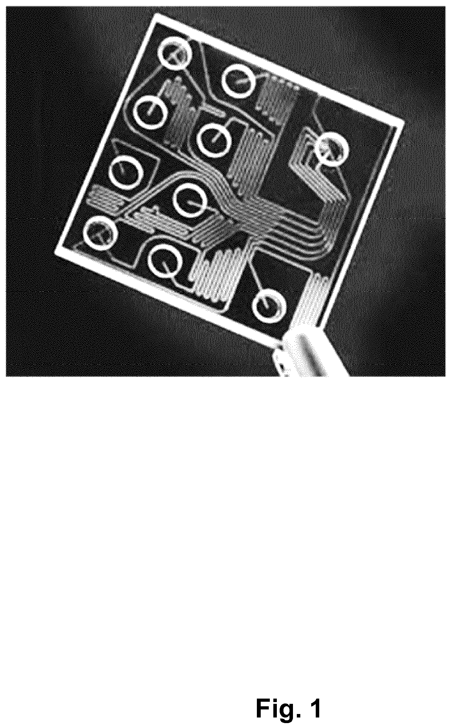

Today's high standards of life demand for quick and reliable products that can be easily used and are at low cost. Examples can be found in health care, where every second counts and vital body information, e.g. from blood, urine or saliva, must be readily obtained. Usually analysis takes time and therefore research is devoted to miniaturize medical equipment and the amount of body liquids required. Such fast diagnostics became possible using micro-fluidics in lab-on-chip and micro-total-analysis systems, see Figure. 1

Miniaturization and integration of a complete diagnostic lab onto a credit-card sized chip is still a challenge and, to handle very small volumes of fluids, micro channels are needed.

A cheap and fast technology for creating a lab on a chip is injection molding. Injection molding typically provides low cost parts, with a fast cycle time. For obtaining injection molded labs on a chip with the desired micro-channels, two parts are manufactured separately and are then later joined or bonded in some way. Such injection molded labs on a chip are, for example, described in Kim et al., "Disposable integrated microfluidic biochip for blood typing by plastic microinjection molding.", printed in Lab Chip, Jun 2006, Vol. 6(6), pp 794-802.

Another example is disclosed in document US2011/070132 A1.

Disadvantages associated with the use of injection molded labs on chip are bonding and alignment problems that occur when closing the channels.

Currently, besides the already mentioned molding techniques, silicon chip technology is used to create micro-fluidic devices, characterized by the long time span to realize a new device, and by process limitations to incorporate flexible parts. The other technique frequently used is multilayer soft lithography with polydimethylsiloxane (PDMS). It does not show the disadvantages mentioned but also here the process poses severe limitations on the device design, since sealing channels is an issue, and PDMS swells or dissolves in some organic solvents, limiting its use.

### Summary of the invention

It is an object of the invention to provide a better method of manufacturing a substrate with at least one micro-channel.

A first aspect of the invention provides a method of manufacturing a substrate with at least one micro-channel as defined in the claims.

The current invention uses hesitation, which usually is an unwanted effect resulting in typical molding defects, to create structures with closed and sealed micro channels under the surface.

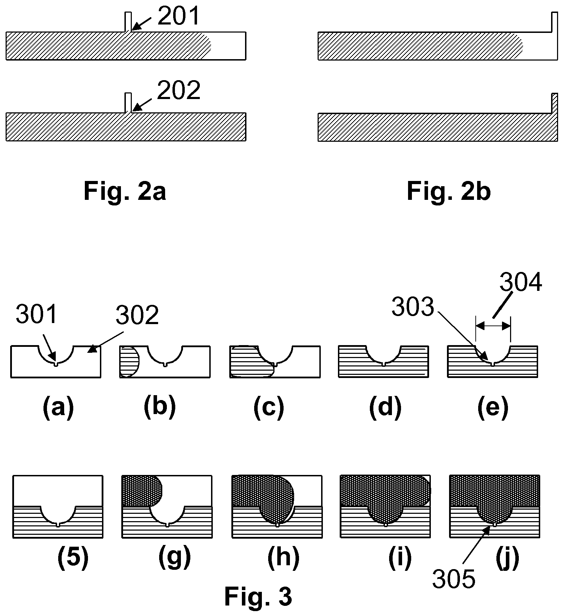

Hesitation is the local slow down, or complete stop, of flow filling in a cavity with a thick and thin section. When given a choice by creating parallel flow paths, the polymer melt chooses the route with the lowest resistance and therefore tends to fill the thick section first, see Figure 2a. During flow in this thick section, the polymer at the entrance of the thin cavity part is given time to cool, to raise viscosity and ultimately to freeze-inn. At position 201 an early freeze-in occurs and, when the channel is filled, the early freeze-inn is termed a hesitatio 202. In textbooks you can read that this classical problem can be solved by placing the thin cavities at the end of filling, see Figure 2b.

Here we try transforming this effect that usually is considered as a problem into a useful technique. The proposed technique uses a two-shot injection molding approach as illustrated in Figure 3. For ease of understanding, line patterns are used in the Figures - this is done to illuminate the principle. In the actual parts, the injected material may have any colors, may be transparent or translucent etc. Equally, where we use polymer, this may be all types of polymers. Even in the two shots, these may be done with the same or with different polymers.

First a base plate 302 is injection molded which contains a slot 304 with a half open micro channel 303 inside. This base 302 is injection molded at high speeds, temperatures and packing pressure, such that the polymer melt completely surrounds the micro rib 301 that later forms the micro channel 305. It is to be noted that although the invention will further be elucidated with reference to the use of polymers, the method according to the invention also works with other moldable materials like glass.

These and other aspects of the invention are apparent from and will be elucidated with reference to the embodiments described hereinafter.

It will be appreciated by those skilled in the art that two or more of the above-mentioned options, implementations, and/or aspects of the invention may be combined in any way deemed useful.

### Brief description of the drawings

In the drawings:
Fig. 1 shows a Lab-on-chip device,
Fig. 2a schematically shows hesitation in a micro cavity positioned halfway the flow length,
Fig. 2b schematically shows a solution for hesitation in a micro cavity by putting the micro cavity at the end of the flow length,
Fig. 3 schematically shows filling the base plate with a first polymer and the filling of the enlarged mould cavity with a second polymer,
Fig. 4 schematically shows dimension of the first layer and of the complete product with micro channel inside,
Fig. 5 schematically shows mesh with refinement in slot and micro channel,
Fig. 6 schematically shows filling simulations showing cavities which are filled for a different percentage,
Fig. 7 schematically shows filling simulation similar to the filling simulations of Fig. 6, however, with a different model geometry,
Fig. 8 schematically shows filling simulations similar to the filling simulations of Fig. 7, however, with a different model geometry,
Fig. 9 schematically shows a mould designed to check the principle,
Fig. 10 presents a snapshot of a cross-section,
Fig. 11 presents photographs of inserts and mould,
Fig. 12 presents cross sections of semi-circular slots and the micro channel,
Fig. 13 presents a cross section over the length of the micro channel,
Fig. 14 presents cross sections of triangular slots and the micro channel,
Fig. 15 shows a schematic representation of the splitting and recombining flows in a serpentine channel designed on top of a triangular slot.

It should be noted that items denoted by the same reference numerals in different Figures have the same structural features and the same functions, or are the same signals. Where the function and/or structure of such an item have been explained, there is no necessity for repeated explanation thereof in the detailed description.

The Figures are purely diagrammatic and not drawn to scale. Particularly for clarity, some dimensions are exaggerated strongly.

### Detailed description

Figure 3 shows filling the base plate with a first polymer at high speed, temperature and packing pressure Figure 3(a)-(e). After enlarging the mould cavity, the second polymer is injected over the first one at low speed, temperature and packing pressure Figure 3(f)-(g). Hesitation during the second shot leaves the micro channel 305 open. When the polymers used in the subsequent shots are the same or similar polymers, welding can take place successfully. After cooling and ejection a single one-piece polymer substrate with one or more internal microscopic channels is the result.

In Figure 3, the microscopic channel has a rectangular cross section, on the top of a semi circular base. Both base and microscopic channel can have other geometries, the principle being that the combined geometry allows for the hesitation effect to take effect.

The method of the invention may be beneficial for micro-channels with a diameter of between about 0.001 and 2 mm. A typical micro-channel diameter for lab-on-a-chip applications is about 0.200 mm. When the diameter is below about 0.02 mm, the here disclosed method even works when the second polymer is injected under high pressure and temperature. For larger micro-channels, lower pressures and/or temperatures may be needed for ensuring freeze-in of the polymer before the second polymer has a chance to fill the micro-channel completely.

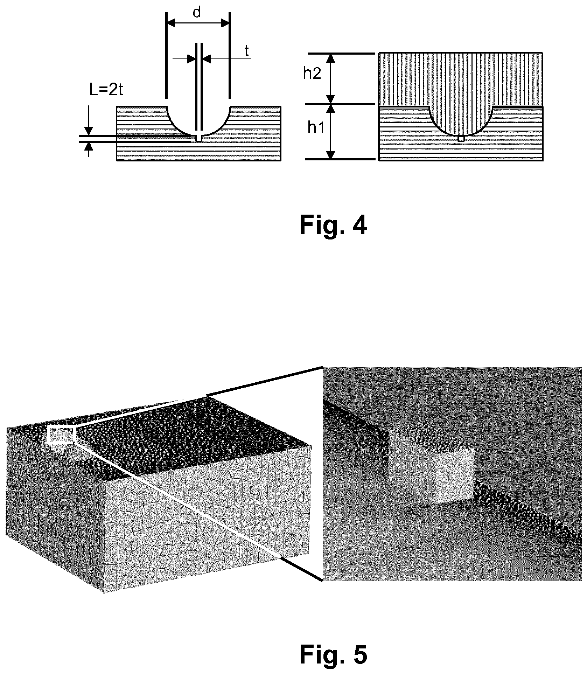

After cooling the first product and locally enlarging the mould cavity, a second layer of polymer is injected (slow, at low temperature and pressure) over the first layer, forming the micro channel via hesitation. Since both shots use the same or similar polymers, their contact lines change into weld lines during this process. Some relevant geometry parameters are shown in the Figure 4.

The basic function of the slot in the base plate is to cool the polymer melt and protect the micro channel from shear flow, this determines its width d. In this example, the length 1 of the micro channel to be formed is chosen *L* = *2t.* Other *L*/*t*-ratios can also be used. Given the small sizes *L* and *t* of the micro channel to be formed, the height *h1* of the first layer controls the aspect ratio *h1*/*L* that should be not too large to allow for detailed filling in the first shot.

The height of the second layer, *h2,* affects the flow front radius in the second shot and it is preferable that the ratio *h2*/*d* is not too high to prevent melt from flowing over the slot, since we inject perpendicular to the slot direction. Besides not being too large, the *h2*/*d* ratio is preferably also not too small since, then the polymer melt will not fill the slot at all, prohibiting the formation of the micro channel. It is to be noted that the measures mentioned above are just provided as examples. Deviations from these measures are possible without departing from the main idea of the invention.

The slot is not a necessary feature. However, without the use of the slot some of the above mentioned advantages will not be as apparent as when using the slot.

2-shot molding with use of the hesitation results in the following advantages: i) It is a relatively cheap technique, typically suitable for mass manufacturing. ii) It is a relatively fast technique. This way, it only takes about 30 second to provide a polymer substrate with the desired micro-channels. Constructing a similar substrate by putting together two half substrates easily takes about 30 minutes. iii) No gluing, welding or sealing is needed for keeping two half substrates together. iv) Materials to be used are widely available, and end of life easily recycled. v) Typical for the two shot method is the fact that in the second shot, one overmolds the first shot, so all alignment and bonding problems are solved by the two-shot technique. vi) Typical for the hesitation effect, is the possibility to create sub surface micro channels. vii) From the design of a new geometry towards a functioning process, typically within weeks, one is able to generate products. viii) In comparison with two individually molded parts, one needs less tooling, hence less tooling costs in a 2 shot technique.

### Flow simulations

Simulations of the filling process are performed using Moldflow™ with high mesh refinement at the micro features to always have at least 10 elements over the thickness, see Figure 5. Only half the cavity, with wall height *h2,* is modeled to simulate the second shot. The slot, plates and micro channel have varying widths. In Fig. 5, *h2* = 1 mm, *d* = 0.3 mm and *t* = 0.01mm.

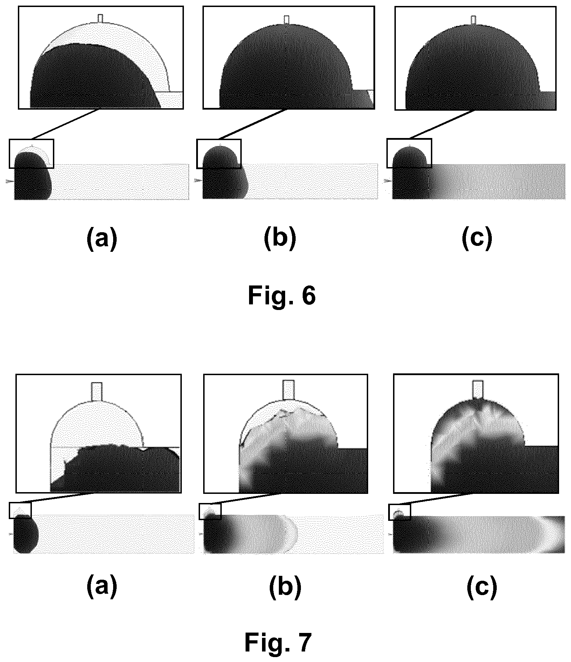

Figure 6 shows filling at different times during injection moulding of the second shot; grey values indicate the time to fill. It is clear that under these conditions the micro channel on top of the slot remains open, due to hesitation. In Fig. 6(a) the cavity filling is 15%, in Fig. 6(b) the cavity filling is 20% and in Fig. 6(c) the cavity filling is 100%. The process settings are: injection time Is, packing pressure 30 MPa and moulding temperature 40 °C. The geometry for the used simulation model are: *h2* = 1 mm, *d* = 1.0 mm and *t* = 0.03mm.

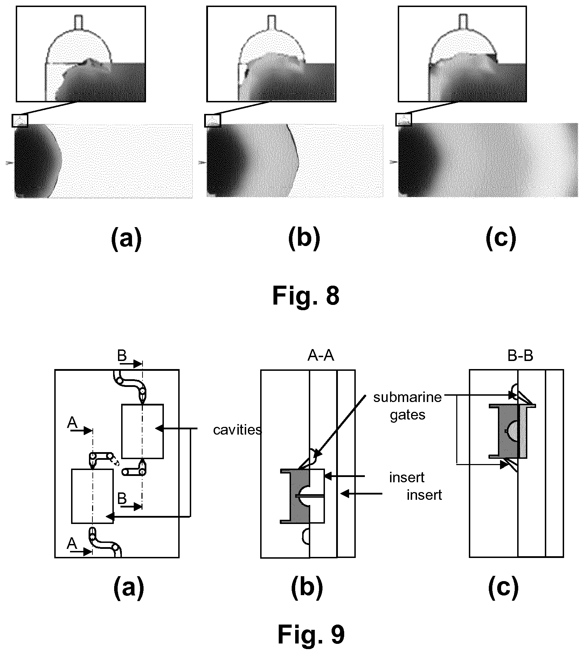

Next the slot width *d* was decreased to increase the aspect ratio *h2*/*d,* see Figure 7, *d* Iwas set to *d* = 0.3mm. Now the slot is filled almost at the end of the filling process, giving the local flow front in the slot almost no chance to cool and solidify. Nevertheless a micro channel is successfully formed but we consider this to be on the edge of the processing window. When we increase the aspect ratio further, hesitation sets in too early and as a result the micro channel is not reached by the melt front and the slot is left open, see Figure 8. A difference between the simulation of Figure 7 and Figure 8 is that the value of h2 was increased towards *h2* = 2mm.

Table 1 summarizes all simulation results for *h2* = 1 mm. The most important parameter proves to be the filling time (the inverse of the injection speed) which should be long (*tᵢₙⱼ* = 1 s).

**Table 1: Overview of the results of the simulations of the second shot predicting micro channel formation changing the geometry and the process settings. A correctly formed channel is indicated with +, a channel filled with polymer is indicated with - and a channel which is not reached by the polymer melt is indicated with --. In all cases the layer height h2 = 1 mm.**

| Process settings: | | | | | | | | | Geometry dimensions [mm]: | | | | | | | |
|---|---|---|---|---|---|---|---|---|---|---|---|---|---|---|---|---|
| (1) filling time [seconds] | | | (2) packing pressure [MPa] | | (3) mould temperature [°C] | | (4) packing delay [seconds] | | fixed parameters: h2 = 1 mm | | | | | | | |
| | | | | | | | | | (5) d | 1.0 | **x** | **x** | **x** | | | |
| | | | | | | | | | | 0.3 | | | | **x** | **x** | **x** |
| 1.0 | 0.5 | 0.1 | 30 | 90 | 20 | 40 | 0 | 1 | (6) t | 0.10 | **x** | | | **x** | | |
| | | | | | | | | | | 0.03 | | **x** | | | **x** | |
| | | | | | | | | | | 0.01 | | | **x** | | | **x** |
| **x** | | | **x** | | **x** | | **x** | | Channel | | + | + | + | -- | -- | + |
| | **x** | | **x** | | **x** | | **x** | | conditions | | - | + | - | -- | + | + |
| | | **x** | **x** | | **x** | | **x** | | | | - | - | - | - | - | - |
| **x** | | | | **x** | **x** | | **x** | | Open: + | | - | + | + | - | - | + |
| | **x** | | | **x** | **x** | | **x** | | Filled: - | | - | - | - | -- | + | + |
| | | **x** | | **x** | **x** | | **x** | | not | | - | - | - | - | - | - |
| **x** | | | **x** | | | **x** | **x** | | reached: -- | | + | + | + | -- | + | + |
| | **x** | | **x** | | | **x** | **x** | | | | - | - | + | - | - | + |
| | | **x** | **x** | | | **x** | **x** | | | | - | - | - | - | - | - |
| **x** | | | | **x** | | **x** | **x** | | | | - | + | + | -- | + | - |
| | **x** | | | **x** | | **x** | **x** | | | | - | - | + | - | - | + |
| | | **x** | | **x** | | **x** | **x** | | | | - | - | - | -- | - | - |
| **x** | | | **x** | | **x** | | | **x** | | | + | + | + | -- | -- | + |
| | **x** | | **x** | | **x** | | | **x** | | | - | - | - | -- | + | + |
| | | **x** | **x** | | **x** | | | **x** | | | - | - | - | - | - | - |
| **x** | | | | **x** | **x** | | | **x** | | | + | + | + | -- | -- | + |
| | **x** | | | **x** | **x** | | | **x** | | | - | - | - | -- | + | + |
| | | **x** | | **x** | **x** | | | **x** | | | - | - | - | - | - | - |
| **x** | | | **x** | | | **x** | | **x** | | | + | + | + | -- | + | + |
| | **x** | | **x** | | | **x** | | **x** | | | - | - | - | -- | + | + |
| | | **x** | **x** | | | **x** | | **x** | | | - | - | - | -- | -- | - |
| **x** | | | | **x** | | **x** | | **x** | | | + | + | + | -- | -- | + |
| | **x** | | | **x** | | **x** | | **x** | | | - | - | - | -- | + | + |
| | | **x** | | **x** | | **x** | | **x** | | | - | - | - | - | - | - |

A delay time of 1 s before increasing to the packing pressure does not compensate for too fast filling. The second important parameter is the aspect ratio *h2*/*d.* For values larger than 1 (*h2*/*d* = 3 in the table) the slot is filled too late which withholds the melt flow from reaching the micro channel. The packing pressure has only a small influence, while it was expected to be more important. Anyway, lower pressures are to be preferred, despite the danger of sink marks. The influence of the mould temperature is minor.

Table 2 shows the results for a channel height of *h2* = 2 mm. For proper comparison with the results of *h2* = 1 mm, some extra simulations were performed with a slot thickness of *d* = 0.6 mm to keep the ratio *h2*/*d* constant. Again, a slow injection time of 1 s is the best choice. As expected, for a slot thickness *d* = 0.3 mm all results show failure in making proper channels, given the aspect ratio *h2*/*d* ≈ 7, which clearly is too high.

**Table 2: As Table 1, now for a layer height h2 = 2.0 mm.**

| Process settings: | | | | | | | | | Geometry dimensions [mm]: | | | | | | | | | |
|---|---|---|---|---|---|---|---|---|---|---|---|---|---|---|---|---|---|---|
| (1) filling time [seconds] | | | (2) packing pressure [MPa] | | (3) mould temp. [°C] | | (4) packing delay [seconds] | | fixed parameters: h2 = 2.0 mm | | | | | | | | | |
| | | | | | | | | | (5) d | 1.0 | **x** | **x** | **x** | | | | | |
| | | | | | | | | | | 0.6 | | | | **x** | **x** | | | |
| | | | | | | | | | | 0.3 | | | | | | **x** | **x** | **x** |
| 1.0 | 0.5 | 0.1 | 30 | 90 | 20 | 40 | 0 | 1 | (6) t | 0.10 | **x** | | | | | **x** | | |
| | | | | | | | | | | 0.03 | | **x** | | **x** | | | **x** | |
| | | | | | | | | | | 0.01 | | | **x** | | **x** | | | **x** |
| **x** | | | **x** | | **x** | | **x** | | Channel | | - | + | - | - | - | - | - | - |
| | **x** | | **x** | | **x** | | **x** | | conditions | | - | - | - | - | - | - | - | -- |
| | | **x** | **x** | | **x** | | **x** | | | | - | - | - | - | - | - | - | - |
| **x** | | | | **x** | **x** | | **x** | | Open: + | | - | + | - | + | - | - | - | -- |
| | **x** | | | **x** | **x** | | **x** | | Filled: - | | - | - | - | - | - | + | - | + |
| | | **x** | | **x** | **x** | | **x** | | not | | - | - | - | - | - | - | - | - |
| **x** | | | **x** | | | **x** | **x** | | reached:-- | | - | + | - | + | - | -- | -- | -- |
| | **x** | | **x** | | | **x** | **x** | | | | - | - | - | - | - | - | - | -- |
| | | **x** | **x** | | | **x** | **x** | | | | - | - | - | - | - | - | - | - |
| **x** | | | | **x** | | **x** | **x** | | | | + | + | + | - | - | - | - | - |
| | **x** | | | **x** | | **x** | **x** | | | | - | - | - | - | - | -- | - | + |
| | | **x** | | **x** | | **x** | **x** | | | | - | - | - | - | - | - | - | - |
| **x** | | | **x** | | **x** | | | **x** | | | + | + | + | + | + | -- | -- | -- |
| | **x** | | **x** | | **x** | | | **x** | | | - | - | - | - | - | - | - | -- |
| | | **x** | **x** | | **x** | | | **x** | | | - | - | - | - | - | - | - | - |
| **x** | | | | **x** | **x** | | | **x** | | | + | + | + | + | + | -- | -- | -- |
| | **x** | | | **x** | **x** | | | **x** | | | - | - | - | - | - | - | - | -- |
| | | **x** | | **x** | **x** | | | **x** | | | - | - | - | - | - | - | - | - |
| **x** | | | **x** | | | **x** | | **x** | | | + | + | + | + | + | -- | -- | -- |
| | **x** | | **x** | | | **x** | | **x** | | | - | - | - | - | + | - | - | -- |
| | | **x** | **x** | | | **x** | | **x** | | | - | - | - | - | - | - | - | - |
| **x** | | | | **x** | | **x** | | **x** | | | + | + | + | + | + | -- | -- | -- |
| | **x** | | | **x** | | **x** | | **x** | | | - | - | - | - | + | - | - | -- |
| | | **x** | | **x** | | **x** | | **x** | | | - | - | - | - | - | - | - | - |

Figure 9 presents a mould designed to check the principle, showing the cavities and injection runners Fig. 9(a), the cross-section along the line A-A illustrating the base-layer after the first shot Fig. 9(b) and the cross-section along B-B showing the upper layer after injection of the second shot, used to close the half open micro channel Fig. 9(c).

To create the micro channel, inserts which define the subsequent shots are mounted in mold house to allow an easy exchange in channel thickness t and channel length L. Submarine gates may be applied to separate the runner from the product without user intervention. Using different inserts the important parameters, among others the height h2, the width d of the slot and the width t of the micro channel, for this process can be altered.

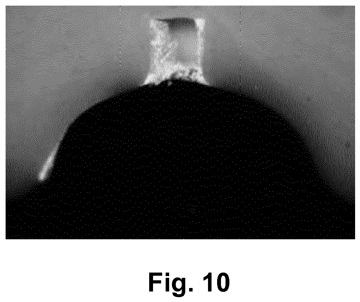

A magnified snapshot of a result is given in Figure 10.

### Further tests

For this test, to illuminate the principle, we have chosen to use two polycarbonates, one colored, one transparent. For the actual application, this may be any color, transparent or translucent.

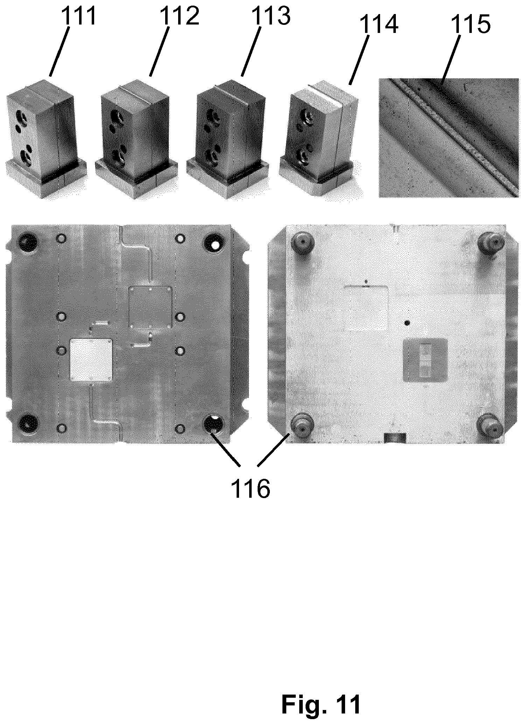

Figure 11 shows the actual mould together with the inserts. Also a different slot geometry (indicated with Δ) is made, with a triangular cross section and a base dimension of 1 mm, a top angle of 900 and therefore a height of 0.5 mm.

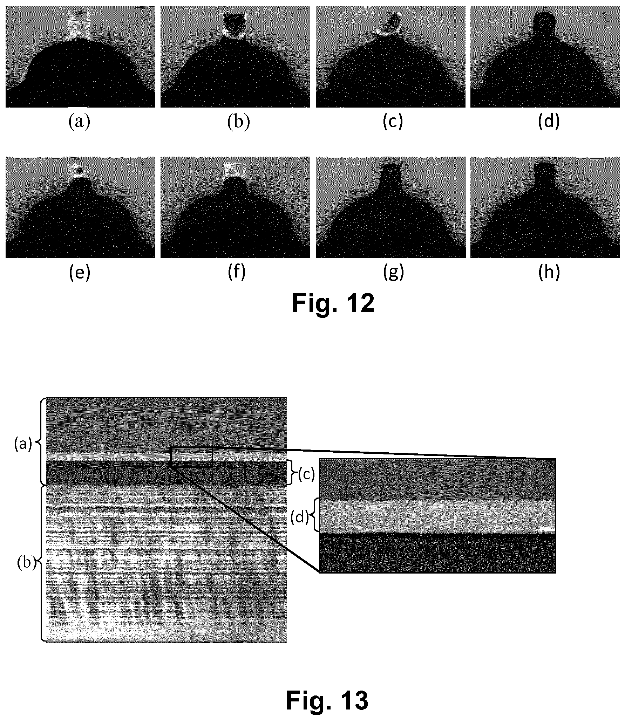

Different directions of the flow relative to the orientation of the slot and the micro channel, parallel or perpendicular are realized by rotating the total insert. Some snapshots of results are given in Figure 12 for the semi-circular slot and in Figure 13 for the triangular slot Δ. Although packing pressures are needed to compensate for shrinkage, too high values result in closing of the micro channel. The triangular slot geometry is to be preferred over the semi-circular one, and allows both parallel and perpendicular flow directions at realistic packing pressures. Table 8.3 shows all results.

Figure 11 shows inserts 111 .. 114(with metal sheet clamped in-between) used to form the slot and the half open micro channel; ESEM image 115 of the insert width *d* = 1 mm and *t* = 0.1 mm and the mould 116 used. The inserts 111 to 114 have, respectively, parameters *d* = 0.6 mm, *d* = 1 mm and *t* = 0.1 mm, *d* = 1.2 mm, and *d* = 1 mm and *t* = 0.4 mm.

In Figure 12 cross sections of the semi-circular slot and the micro channel with 1 mm circular slot, *h2* = 4 mm and a 200 µm channel thickness, injected perpendicular (a)-(d) and parallel (e)-(f) to the orientation of the slot. Parameter is the packing pressure, which is applied for 1 second: in (a), (e) 0 MPa, (b), (f) 30 MPa, (c), (g) 90 MPa and (d), (h) 150 MPa.

The images in Figure 12 are cross-sectional views of the center part of the product obtained with light microscope. In order to differentiate between the first and second layer, only the first layer is colored making the second layer look black. From the images that are shown in Figure 12 we can see open channels when packing pressure below 90 MPa is applied. At higher packing pressure the process becomes critical and at 150 MPa packing pressure the micro channel is totally filled. Apart from perpendicular injection, also parallel injection is tested which seems to be more critical because more heat is transferred into the micro structure by the melt flow that dives somewhat into the channel during injection.

In the images of Figure 12, the cross-sections are al made at the same location. To give a good representation of the whole micro channel a cross-section parallel to the micro channel is made (Figure 13) which shows the straightness of the channel. The bottom line is formed by the melt front which tried to fill the half open micro channel as has, therefore, a perfect smooth polished like surface. The roughness of the top line is formed by the sheet clamped between the two insert halves and can be improved by polishing the sheet edge.

Figures 13 presents a cross-section over the length of the micro channel with a 1.2 mm circular slot, *h2* = 4 mm and a 200 µm channel thickness, with injection perpendicular to micro channel orientation. Different layers are recognized: The first half product layer (a) the second half product layer used for closing off the micro channel (b), the semi-circular slot (c) and the micro channel (d)

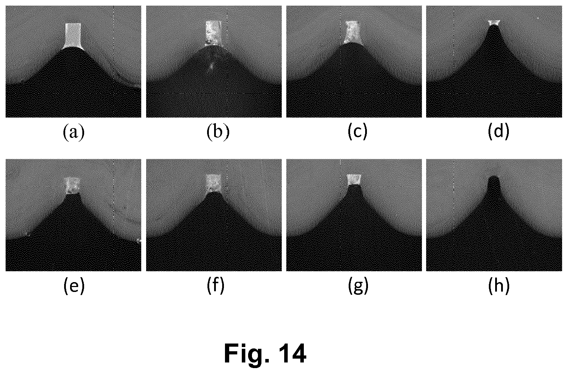

For later use in forming micro mixers under the surface, also a triangular slot geometry Δ is tested, see Figure 14, which proves to give an even better result. Up to 90 MPa the channels remain open in both cases of perpendicular and parallel injection.

In Figure 14 cross sections of the triangular slots and the micro channel with 1 mm circular slot, *h2* = 4 mm and a 200 µm channel thickness, injected perpendicular (a)-(d) and parallel (e)-(f) to the orientation of the slot. Parameter is the packing pressure, which is applied for 1 second: in (a), (e) 0 MPa, (b), (f) 30 MPa, (c), (g) 90 MPa and (d), (h) 150 MPa.

More process setting and geometry dimensions can be found in Table 3. Channels that are filled for less than 50% are considered as open, see for example the open channel shown in Figure 14 (g).

From the Table 3 we conclude that the aspect ratio is the most important factor: for the *h2* = 2 mm the maximum allowable semi-circular slot width is 1.0 mm for a micro channel width of 100 µm, whereas for *h2* = 4 mm an open micro channel is obtained with a slot diameter of 1.2 mm. For the aspect ratio this means that according to the table *h2*/*d* ≈ 3. This is consistent with the numerical results as can be found in Tables 1 and 2. The second important parameter is the packing pressure which must be kept low, under 30 MPa. If we consider the two different slot geometries, we can conclude that a triangular slot shows better results than a semi-circular slot.

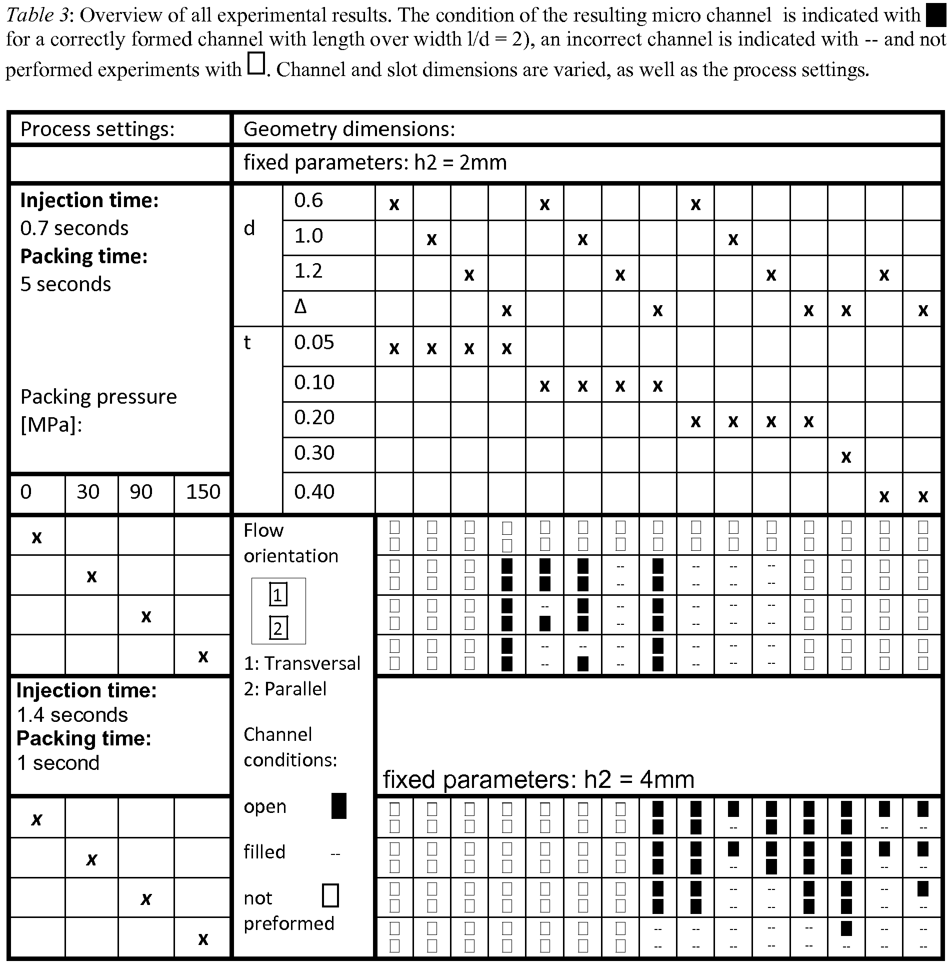

### Serpentine mixer

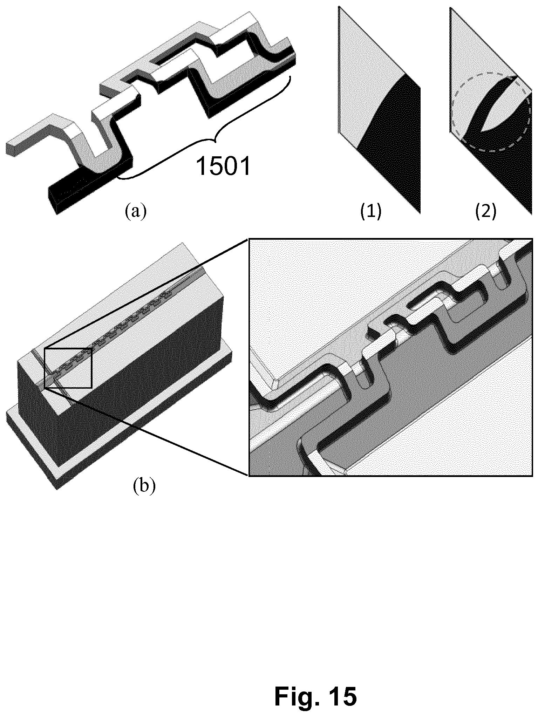

To integrate static mixing under the surface of a polymer product, the same principle of splitting, rotating and recombining flows like realized in the DentIncx mixer is used. However the DentIncx mixer is designed to be formed between two parallel plates and the technique here allows to create structures only in the first layer, and not in the closing layer. To realize a double bended channel that is needed for transversally rotating the flow, the mixer is designed on the two sides of a triangular shaped slot, see Figure 15.

Figure 15 shows a schematic representation of the splitting and recombining flows in a serpentine channel designed on top of a triangular slot, Figure 15 (a), together with the calculated layer propagation and the insert designed to be CNC milled using a 100 µm milling cutter, Figure 15 (b). To a single mixing element is referred by 1501.

To check the performance of the mixing element, some preliminary calculations have been performed using TFEM. The results are shown in Figure 15 (a) right end. The rotation of flow functions as intended, but mixing seems not optimal, showing incomplete interface stretching, like in the Ross LPD and LLPD static mixers, see ProgrPolSci for a review on the performance of all industrially relevant static mixers, and large unmixed regions in the sharp corners. They are caused by the low velocity in the wedges of the diamond-shaped cross-section of the mixer.

In summary, the invention relates to: Commonly hesitation forms a problem during injection molding of products with thin or non-uniform wall thickness. Here we transform this problem into a useful technology to create sub-surface micron sized channels via a two shot injection molding technique. The first mould is such that the product contains a number of micro grooves with, e.g., a width of about 200 µm and a depth of about 300 µm. In order to produce this first half of the product, a low viscosity polymer is injected at high melt temperature using a high injection speed and high packing pressure for detailed filling. Next, the mould cavity is widened and a second layer of the same, or a different, polymer is molded on top of the first one. Slots in the (now polymer) mould wall are easily filled directly, but micro structures at the slot surface remain unfilled, given their high flow resistance. Once the polymer melt is frozen-in sufficiently fast to prevent filling during the packing phase, micro channels are captured under the surface. The same process for providing a substrate with micro channels may also be used for producing, e.g., glass substrates. In principle, any moldable material may be used in combination with the here disclosed method for providing a substrate with micro channels

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A method of manufacturing a substrate with at least one micro-channel, the method comprising the steps of,
- injection molding a first moldable material at high speed, high temperature and high packing pressure in a mould cavity for forming a base plate with at least one half open micro-channel (303) at its outer surface,
- enlarging the mould cavity,
- injection molding a second moldable material into the enlarged mould cavity over the first moldable material for adding a cover layer to the base plate, the cover layer covering the half open micro-channel (303) wherein
- the injection molding of the second moldable material is performed at low speed, low temperature and low packing pressure
- during the injection molding of the second moldable material, the second moldable material freezes-in without or without completely filling the half open micro-channel (303), thereby forming the at least one micro-channel (305) in the substrate, wherein the base plate is formed with a slot (304) at its outer surface, the at least one half open micro-channel (303) being provided inside the slot (304) and wherein the injection molding of the second moldable material comprises at least partially filling the slot (304) with the second moldable material.

2. A method of manufacturing a substrate as claimed in claim 1, wherein the first and/or the second moldable material are polymers.

3. A method of manufacturing a substrate as claimed in claim 1, wherein the first and/or the second moldable material are glass.

4. A method of manufacturing a substrate as claimed in any one of the preceding claims, wherein the first and the second moldable materials are the same materials.

5. A method of manufacturing a substrate as claimed in claim 1, wherein the slot is a semi-circular or triangular slot and the at least one half open micro-channel (303) at a top of the semi-circular or triangular slot.

6. A method of manufacturing a substrate as claimed in claim 5, wherein an aspect ratio h2/d is smaller or equal to 3, the parameter h2 is a height of the cover layer and the parameter d is a width of the a semi-circular or triangular slot.

7. A method of manufacturing a substrate as claimed in claim 6, wherein the aspect ratio h2/d is larger than or equal to 1.

## Patentansprüche

1. Ein Verfahren zur Herstellung eines Substrats mit mindestens einem Mikro-Kanal, wobei das Verfahren die folgenden Schritte umfasst:
- Spritzgießen eines ersten gießbaren Materials bei hoher Geschwindigkeit, hoher Temperatur und hohem Verdichtungsdruck in einer Spritzgießkavität zur Bildung einer Grundplatte mit mindestens einem halboffenen Mikro-Kanal (303) an ihrer äußeren Oberfläche,
- Vergrößern der Spritzgießkavität,
- Spritzgießen eines zweiten gießbaren Materials in die vergrößerte Spritzgießkavität über das erste gießbare Material zum Hinzufügen einer Deckschicht zu der Grundplatte, wobei die Deckschicht den halboffenen Mikro-Kanal (303) bedeckt, worin
- das Spritzgießen des zweiten gießbaren Materials bei niedriger Geschwindigkeit, niedriger Temperatur und niedrigem Verdichtungsdruck durchgeführt wird
- während dem Spritzgießen des zweiten gießbaren Materials friert das zweite gießbare Material ein ohne oder ohne vollständig den halboffenen Mikro-Kanal (303) zu füllen, wodurch der mindestens eine Mikro-Kanal (305) in dem Substrat gebildet wird, worin die Grundplatte mit einem Schlitz (304) an ihrer äußeren Oberfläche ausgebildet ist, wobei der mindestens eine halboffene Mikro-Kanal (303) innerhalb des Schlitzes (304) bereitgestellt ist, und worin das Spritzgießen des zweiten gießbaren Materials das mindestens teilweise Ausfüllen des Schlitzes (304) mit dem zweiten gießbaren Material umfasst.

2. Ein Verfahren zur Herstellung eines Substrats wie in Anspruch 1 beansprucht, worin das erste und/oder das zweite gießbare Material Polymere sind.

3. Ein Verfahren zur Herstellung eines Substrats wie in Anspruch 1 beansprucht, worin das erste und/oder das zweite gießbare Material Glas ist.

4. Ein Verfahren zur Herstellung eines Substrats wie in irgendeinem der vorhergehenden Ansprüche beansprucht, worin die ersten und die zweiten gießbaren Materialien die gleichen Materialien sind.

5. Ein Verfahren zur Herstellung eines Substrats wie in Anspruch 1 beansprucht, worin der Schlitz ein halbrunder oder dreieckiger Schlitz ist, und der mindestens eine halboffene Mikro-Kanal (303) an einer Spitze des halbrunden oder dreieckigen Schlitzes ist.

6. Ein Verfahren zur Herstellung eines Substrats wie in Anspruch 5 beansprucht, worin ein Aspektverhältnis h2/d kleiner oder gleich 3 ist, der Parameter h2 ist eine Höhe der Deckschicht und der Parameter d ist eine Breite des halbrunden oder dreieckigen Schlitzes.

7. Ein Verfahren zur Herstellung eines Substrats wie in Anspruch 6 beansprucht, worin das Aspektverhältnis h2/d größer als oder gleich 1 ist.

## Revendications

1. Procédé de fabrication d'un substrat comportant au moins un microcanal, le procédé comprenant les étapes de
- moulage par injection d'un premier matériau moulable à haute vitesse, haute température et haute pression de compactage dans une cavité de moule pour former une plaque de base comportant au moins un microcanal semi-ouvert (303) sur sa surface extérieure,
- agrandissement de la cavité de moule,
- moulage par injection d'un second matériau moulable dans la cavité de moule agrandie par-dessus le premier matériau moulable pour ajouter une couche de couverture à la plaque de base, la couche de couverture couvrant le microcanal semi-ouvert (303), dans lequel
- le moulage par injection du second matériau moulable s'effectue à basse vitesse, basse température et basse pression de compactage
- lors du moulage par injection du second matériau moulable, le second matériau moulable gèle sans remplir, ou sans complètement remplir, le microcanal semi-ouvert (303), formant ainsi l'au moins un microcanal (305) dans le substrat,
dans lequel la plaque de base est formée avec une encoche (304) sur sa surface extérieure, l'au moins un microcanal semi-ouvert (303) étant prévu à l'intérieur de l'encoche (304) et dans lequel le moulage par injection du second matériau moulable comprend un remplissage au moins partiel de l'encoche (304) avec le second matériau moulable.

2. Procédé de fabrication d'un substrat selon la revendication 1, dans lequel le premier et/ou le second matériau moulable sont des polymères.

3. Procédé de fabrication d'un substrat selon la revendication 1, dans lequel le premier et/ou le second matériau moulable sont le verre.

4. Procédé de fabrication d'un substrat selon l'une quelconque des revendications précédentes, dans lequel les premier et second matériaux moulables sont les mêmes matériaux.

5. Procédé de fabrication d'un substrat selon la revendication 1, dans lequel l'encoche est une encoche semi-circulaire ou triangulaire et l'au moins un microcanal semi-ouvert (303) se trouve dans une partie supérieure de l'encoche semi-circulaire ou triangulaire.

6. Procédé de fabrication d'un substrat selon la revendication 5, dans lequel un rapport de forme h2/d est inférieur ou égal à 3, le paramètre h2 étant la hauteur de la couche de couverture et le paramètre d étant la largeur de l'encoche semi-circulaire ou triangulaire.

7. Procédé de fabrication d'un substrat selon la revendication 6, dans lequel le rapport de forme h2/d est supérieur ou égal à 1.
